# EUROPÄISCHE PATENTANMELDUNG

(11) **EP 0 960 963 A2**
(43) Veröffentlichungstag der Anmeldung: **01.12.1999**
(21) Anmeldenummer: 99107857.7
(22) Anmeldetag: 21.04.1999
(51) Int. Cl.: D01H 4/12

(54) **Lagerung für einen Offenend-Spinnrotor mittels Stützscheiben**

(30) Priorität: 29.05.1998 DE 19824286
(71) Anmelder: Rieter Ingolstadt Spinnereimaschinenbau AG, 85055 Ingolstadt (DE)
(72) Erfinder: Bock, Erich, 85139 Wettstetten (DE); Schuller, Edmund, 85055 Ingolstadt (DE); Knabel, Manfred, 85055 Ingolstadt (DE)
(74) Vertreter: Bergmeier, Werner, Dipl.-Ing.

(57) **Zusammenfassung**

Für eine Lagerung eines Offenend-Spinnrotors, der in Keilspalten von Stützscheiben drehbar gelagert ist, wird vorgeschlagen, eine oder mehrere der Stützscheiben (14) der Lagerung des Offenend-Spinnrotors mit einer Reinigungsnut (3) zu versehen. Die Reinigungsnut (3) kann eine in sich geschlossene Nut sein, die über den Umfang der Stützscheibe (14) verläuft, wobei sie im wesentlichen nicht parallel zu den Kanten der Stützscheibe (14) verläuft. Eine solche Ausgestaltung der Stützscheibe sorgt dafür, daß sich keine Ablagerungen von Verschmutzungen auf dem Rotorschaft ansammeln können.

## Beschreibung

Die vorliegende Erfindung betrifft eine Lagerung für einen Offenend-Spinnrotor gemäß dem Oberbegriff des Patentanspruchs 1. Für die Lagerung von Offenend-Spinnrotoren ist es bekannt, diese über ihren Schaft mittels Stützscheiben zu lagern. Dazu werden in der Regel zwei Paare von Stützscheiben eingesetzt, in deren Kelispalt der Schaft des Spinnrotors so gelagert ist, daß ein Paar von Stützscheiben in Nähe des Rotortopfes den Rotorschaft unterstützt und ein Paar den Rotorschaft an seinem dem Spinnrotor abgewandten Ende. Die Oberfläche des Rotorschaftes des Offenend-Spinnrotors rollt mit faktisch gleicher Umfangsgeschwindigkeit auf den Stützscheiben ab. Angetrieben wird der Offenend-Spinnrotor ebenfalls über seinen Schaft, auf dem, zwischen den beiden Stützscheibenpaaren, ein Tangentialriemen aufliegt, der den Rotorschaft in Drehung versetzt.

Aus der DE 37 34 545 A1 ist eine Lagerung für einen Offenend-Spinnrotor bekannt. Die dort gezeigten Stützscheiben besitzen auf ihrer Lauffläche eine Kühlnut, wie sie in der US-P 5.178.473 für die Verwendung bei Lagerungen für Offenend-Spinnrotoren vorgeschlagen wurde. Eine Stützscheibe besteht aus einem Grundkörper, auf dem ein Laufbelag aufgebracht ist. Der Laufbelag besteht aus einem Kunststoff, wodurch besonders günstige Laufeigenschaften für den Offenend-Spinnrotor gewährleistet werden. So sorgt dieser Belag für eine Dämpfung des Spinnrotors während seines Betriebes sowie für einen ruhigen Lauf der Spinnmaschine. Durch das Abrollen des Rotorschaftes auf dem Laufbelag einer Stützscheibe erwärmt sich dieser derart, daß Beschädigungen eintreten können. Diese werden durch Überhitzung des Stützscheibenbelages verursacht. Die US-P 5.178.473 schlägt daher neben anderen besonderen Ausgestaltungen der Lauffläche, wie z.B. Rippen, eine Kühlnut im Belag der Stützscheiben vor. Diese Kühlnut findet praktisch bei allen Lagerungen für Offenend-Rotorspinnmaschinen bzw. bei den dort verwendeten Stützscheiben Anwendung.

Die DE 195 49 466 A1 zeigt im wesentlichen, wie der Grundkörper einer Stützscheibe ausgebildet ist, so daß eine günstige Verbindung zwischen dem aus Kunststoff bestehenden Belag der Stützscheibe und deren Grundkörper realisiert werden kann.

Aus der US-P 5.551.226 ist eine Stützscheibe zur Lagerung eines Offenend-Spinnrotors bekannt, deren Belag gerippt ausgebildet ist, so daß der Rotorschaft auf vielen einzelnen Rippen abrollt. Die Außenseite der Rippen, auf denen der Rotorschaft abrollt, bilden also die Lauffläche für den Rotorschaft des Spinnrotors. Die Rippen sind gegenüber der Mittellinie M des Belages der Stützscheibe geneigt, so daß beim Abrollen des Schaftes des Spinnrotors auf diesen eine axial wirkende Kraft ausgeübt wird, die sich dann in bekannter Weise an einem Axiallager abstützt. Zwar scheint bei dieser Ausführung eines Stützscheibenlagers eine Abfuhr der im Betrieb im Belag der Stützscheibe entstehenden Wärme durchaus gut möglich zu sein, jedoch wird die Breite des Belages im Bereich der Berührlinie mit dem Rotorschaft so geschwächt, daß eine Überlastung des Belages stattfindet. Durch die Gegebenheiten bei einer Lagerung für einen Offenend-Spinnrotor ist es praktisch nicht möglich, diese Schwächung der Tragfähigkeit der Stützscheibe dadurch zu kompensieren, eine Stützscheibe einfach breiter auszubilden. Die in der US-P 5.551.226 gezeigte Lagerung für einen Offenend-Spinnrotor ist also nur eingeschränkt einsatzfähig, z.B. muß die Betriebsdrehzahl des Spinnrotors verringert werden oder die Andrückkraft für den Antriebsriemen, was beides in der Praxis nicht toleriert werden kann.

Offenend-Spinnmaschinen laufen mit höchsten Drehzahlen der Offenend-Spinnrotoren, wobei Werte von über 150.000 Umdrehungen / Minute erreicht und durchaus weit überschritten werden können. Die Umweltbedingungen, unter denen die Stützscheiben laufen sind dabei äußerst schwierig. So bewirkt z.B. die Verarbeitung von Baumwolle eine hohe Entwicklung an Stäuben, von denen dann die Offenend-Spinnmaschine, und auch die Lagerung für deren Offenend-Spinnrotor, umgeben ist. Dies kann dazu führen, daß Schmutz aus der Umgebung derart mit der Lagerung reagiert, daß sich während des Laufs des Offenend-Spinnrotors sich auf dessen Rotorschaft, im Bereich mit dem er mit den Stützscheiben zusammenarbeitet, d.h. gelagert ist, Schmutz ansammelt. Dieser Schmutz wird von den Stützecheiben aus der Umgebung aufgenommen und auf der Oberfläche des Rotorschaftes abgelagert. Diese Ablagerungen können derart fest sein, daß der Rundlauf des Spinnrotors nicht mehr gewährleistet ist und Betriebsstörungen, wie beispielsweise Fadenbrüche auftreten können. Es hat sich bei der Überprüfung entsprechender Überlegungen herausgestellt, daß der aus Kunststoff bestehende Laufbelag der Stützscheiben nicht nur allein auf mechanischem Weg in Kontakt mit dem Schmutz gerät, sondern sich unter Umständen während des Betriebs elektrostatisch auflädt und dadurch den Schmutz auf seine Oberfläche zieht, von der dieser dann auf den Rotorschaft übertragen wird.

Die Stützscheiben arbeiten mit Drehzahlen zwischen ca. 10.000 und 20.000 Umdrehungen / Minute, so daß eine starke Reibung zwischen Belag und der ihn umgebenden Luft stattfindet. Die elektrostatische Aufladung des Belages bewirkt also das Ablagern von Feinstäuben auf der Oberfläche der Stützscheibe, die dann in Kontakt mit dem Rotorschaft gelangt. Der Schmutz überträgt sich von der Oberfläche der Stützscheibe zum Rotorschaft, wo durch anschließendes ständiges Überrollen des Schmutzes dieser auf dem Rotorschaft zu einem festen Belag förmlich aufgewalzt wird.

Aufgabe der vorliegenden Erfindung ist es daher eine Lagerung für einen Offenend-Spinnrotor so auszubilden, daß die Nachteile des Standes der Technik vermieden werden und ein Verschmutzen von Rotorschaft und auch des Laufbelages der Stützscheiben verhindert wird.

Die vorliegende Aufgabe wird erfindungsgemäß durch die Merkmale des Anspruchs 1 sowie durch die Erfindung gemäß den Merkmalen des Anspruchs 22 und durch die erfinderische Ausbildung einer Lagerung für einen Offenend-Spinnrotor gemäß den Merkmalen des Patentanspruchs 28 gelöst.

Die einzelnen Lösungen können frei miteinander kombiniert werden und unterstützen sich gegenseitig in ihrer Wirkung.

Durch die erfindungsgemäße Ausgestaltung der Lauffläche des Belages der Stützscheibe, die eine Reinigungsnut besitzt, erfolgt eine Reinigung des Rotorschaftes von Verunreinigungen. Die Reinigungsnut bewirkt ein Abschaben der auf den Rotorschaft aufgewalzten Verschmutzungen bzw. sie sorgt dafür, daß Verschmutzungen sich gar nicht erst auf dem Rotorschaft festsetzen können. Die Reinigungsrille sorgt gleichzeitig dafür, daß Verunreinigungen, die sich bereits auf der Stützscheibe angelagert haben diese wieder verlassen, ohne sich auf dem Rotorschaft festzusetzen. Ein sauberer Rotorschaft sorgt gleichzeitig dafür, daß die Umfangsfläche der Stützscheibe, die mit dem Rotorschaft zusammenarbeitet, gereinigt wird. Die Reinigungsnut entfernt den Schmutz, insbesondere feine Staubteilchen, so daß ein einwandfreies Abrollen des Rotorschaftes auf dem Laufbelag der Stützscheibe gewährleistet ist. Dazu besitzt die Lagerung in besonders günstiger Ausgestaltung eine Stützscheibe, deren Reinigungsnut mit einem Winkel zur Mittellinie M des Stützscheibenbelages ausgebildet ist. Dadurch wird erreicht, daß die Reinigungsnut bzw. deren Kante entlang der Längsachse des Rotorschaftes auf dem Schaft Schmutzpartikel regelrecht abschabt. In besonders günstiger Ausgestaltung ist die Reinigungsnut als eine in sich geschlossene Nut ausgebildet, so daß diese besonders günstig gefertigt werden kann und gleichzeitig keine Stöße beim Überrollen des Rotorschaftes entstehen können. Eine in sich geschlossene Nut hat sich beispielsweise bei einer mittigen Kühlnut im Stand der Technik besonders bewährt. In besonders günstiger Weiterbildung der Erfindung besitzt die Reinigungsnut eine Breite zwischen 0,2 mm und 2,0 mm. In günstiger Weiterbildung der Erfindung besitzt die Reinigungsnut eine Tiefe zwischen 0,2 mm und 2,0 mm. Durch diese vorteilhaften Abmessungen wird erreicht, daß Verschmutzungen besonders einfach erfaßt werden können und vom Rotorschaft bzw. der Lauffläche des Belages der Stützscheibe entfernt werden können. Weiterhin wird verhindert, daß sich Schmutz in der Reinigungsnut selbst festsetzen kann.

In günstiger Weiterbildung der Erfindung ist einer ersten Reinigungsnut eine zweite Reinigungsnut zugeordnet, die zur ersten parallel verläuft. Dadurch kann der gesamte relevante axiale Längenabschnitt des Schaftes von den Reinigungsnuten zuverlässig gereinigt werden. Dazu ist es vorteilhaft möglich, daß die eine Reinigungsnut sich mehr im Bereich der Lauffläche des Belages befindet, der dem Spinnrotor zugewandt ist, während die andere Reinigungsnut sich mehr auf der Seite der Lauffläche befindet, die vom Spinnrotor abgewandt ist. Bei einer anderen günstigen Ausgestaltung der Erfindung sind mehrere Reinigungsnuten so angeordnet, daß sie nicht parallel zueinander angeordnet sind, sondern sich kreuzen bzw. überschneiden. Besonders günstig ist eine solche Ausgestaltung mit zwei Reinigungsnuten, weil dadurch beide eine große Neigung zur Mittellinie der Lauffläche haben können.

Bei einer besonders günstigen Weiterbildung der Erfindung ist vorgesehen, daß zusätzlich noch eine Kühlnut an der Lauffläche der Stützscheibe angeordnet ist. Dadurch wird erreicht, daß sich der Belag der Lauffläche trotz einer hohen Belastung während des Betriebes nicht überhitzen kann. Die Kühlnut ist dabei günstigerweise als senkrecht zur Achse der Stützscheibe verlaufende Nut ausgebildet, die vorteilhaft mittig auf der Lauffläche angeordnet ist. In besonders günstiger Ausgestaltung der Erfindung ist die Kühlnut eine endlose Nut, die mittig am Umfang der Stützscheibe angebracht ist. In weiterer günstiger Ausgestaltung der Erfindung besitzt die Lauffläche des Belages der Stützscheibe neben der Reinigungsnut noch zusätzliche Einkerbungen, die im wesentlichen senkrecht zur Stützscheibenachse verlaufen, wodurch erreicht wird, daß große breite Belagsbereiche vermieden werden. Große Materialanhäufungen des Belages können zu Stauungen der Wärme führen, die beim Abrollen des Rotorschaftes auf dem Belag der Stützscheibe entsteht.

Bei einer besonders günstigen Ausgestaltung der Erfindung besitzt die Stützscheibe auf ihrer Lauffläche im Bereich eines oder beider ihrer Ränder eine in Umfangsrichtung ununterbrochen verlaufende Umfangsfläche. Dadurch wird erreicht, daß keine Stoßstellen während des Abrollens des Rotorschaftes auf der Lauffläche entstehen. Die Lauffläche ist im Bereich des Randes nicht unterbrochen. Bei einer günstigen Weiterbildung der Erfindung läuft wenigstens eine der Kanten der Reinigungsnut über den Rand der Lauffläche der Stützscheibe hinaus, wodurch erreicht wird, daß nur eine sehr geringe Stoßstelle beim Abrollen des Rotorschaftes auf der Lauffläche entsteht und trotzdem die Reinigungsnut einen in axialer Richtung des Rotorschaftes betrachtet optimale bis an die Kante der Stützscheibe gehenden Verlauf hat, so daß eine besonders gute Reinigungswirkung erzielt wird. Es wird nur ein geringer Teil des Rotorschaftes in seinem relevanten Bereich nicht von einer Reinigungsnut bearbeitet. Bei einer weiteren vorteilhaften Weiterbildung der Erfindung gehen beide Ränder der Reinigungsnut über beide Kanten der Lauffläche hinaus, wodurch die gesamte axiale Länge des Rotorschaftes, die mit Stützscheiben zusammenarbeitet überstrichen und damit gereinigt wird.

Bei einer weiteren vorteilhaften Ausgestaltung der Erfindung ist vorgesehen, daß die Lauffläche des Belages der Stützscheibe, in axialer Richtung betrachtet, insgesamt höchstens zu 40% von einer Kühlnut und/oder Reinigungsnut unterbrochen ist. Dadurch ist gewährleistet, daß immer eine ausreichend große Berührlinie zwischen Rotorschaft und Stützscheibe verbleibt. Dies ist besonders vorteilhaft um eine hohe Lebensdauer der Stützscheibe zu erreichen. Die Flächenpressung wird auf ein möglichst geringes Niveau herabgesenkt. In einer besonders günstigen Weiterbildung der Erfindung besitzt die Lagerung eine mit einer Reinigungsnut versehene Stützscheibe, deren Lauffläche zwischen 7% und höchstens 25%, betrachtet in axialer Richtung, unterbrochen ist, d.h. die Berührlinie des Rotorschaftes mit der Lauffläche ist nur um 7% bis höchstens 25% verringert, im Vergleich zu einer nutfreien Stützscheibe. In besonders günstiger Weise ist dazu in axialer Richtung betrachtet die Lauffläche von höchstens drei Nuten unterbrochen.

Bei einer besonders günstigen Ausgestaltung der Erfindung ist die Breite der Reinigungsnut kleiner ausgebildet als die Breite der Kühlnut, so daß eine ausreichende Kühlung erreicht wird, ohne daß der Laufbelag eine zu große Schwächung erleidet. Die Reinigungsnut erreicht auch schon ein Reinigen des Rotorschaftes mit einer kleineren Breite als dies für die Funktion der Kühlnut erforderlich ist. Vorteilhaft besitzt die Kühlnut eine Breite zwischen 0,6 mm und 1,6 mm, besonders günstig zwischen 0,8 und 1,4 mm. Die Tiefe der Kühlnut liegt günstig zwischen 0,8 mm und 2,0 mm.

In einer besonders günstigen Weiterbildung der Erfindung besitzt der Grundkörper der Stützscheibe an seiner Umfangsfläche eine Vertiefung, die dem Verlauf der Reinigungsnut angepaßt ist. Dadurch wird gewährleistet, daß die radiale Dicke des Belages zwischen Grundkörper und Reinigungsnut in etwa konstant bleibt. Dadurch ist gewährleistet, daß für das Einfedern des Rotorschaftes in den Belag der Stützscheibe immer konstante Verhältnisse vorliegen, da die Dicke des Belages immer an jeder Stelle konstant ist. In besonders vorteilhafter Weiterbildung der Erfindung besitzt die Reinigungsnut ein u-förmiges Profil. Dies sorgt dafür, daß die Kanten der Nut besonders scharf ausgebildet werden können, wodurch eine bessere Reinigungswirkung erzielt wird. Bei einer anderen günstigen Ausgestaltung der Erfindung besitzt die Reinigungsnut ein v-förmiges Profil. Dies kann besonders einfach hergestellt werden.

Durch die erfindungsgemäße Ausgestaltung der Lauffläche des Belages der Stützscheibe, wobei der Belag aus einem Kunststoff besteht und bei der dieser wenigstens im Bereich der Lauffläche einen elektrischen Widerstand besitzt, der kleiner als 1,0x10⁹ Ohm beträgt, wird vorteilhaft erreicht, daß sich die Lauffläche der Stützscheibe nur so wenig statisch auflädt (elektrostatische Aufladung), daß weit weniger Schmutz aus der Umgebung angezogen wird. Es wird außerdem dadurch vorteilhaft erreicht, daß die auf die Schmutzteilehen wirkenden elektrischen anziehenden Kräfte kleiner sind als die diesen Kräften entgegenwirkenden Fliehkräfte. Die Fliehkräfte, die auf die Staubpartikel einwirken, sind eine Folge der Drehung der Stützscheibe, so daß Durchmesser und Drehzahl der Stützscheibe bei der Auslegung des elektrischen Widerstandes des Belages entsprechend zu berücksichtigen sind. Der Wert von 1,0x10⁹ Ohm hat sich dabei als ein im Durchschnitt günstiger Wert herausgestellt, der sich bei den gängigen Stützscheibendurchmessern und deren Drehzahl bewährt hat. Gleichzeitig ist es möglich den Belag trotz des herabgesenkten elektrischen Widerstandes mit günstigen Materialeigenschaften ausgestalten zu können. Additive, die zum Herabsenken des elektrischen Widerstandes der Lauffläche führen, können nämlich die mechanischen Eigenschaften des Belages unter Umständen ungünstig beeinflussen. Ein völliges Herabsetzen des elektrischen Widerstandes des Belages ist daher zwar theoretisch wünschenswert jedoch praktisch entweder nur unter hohem Kostenaufwand oder mit einer Verschlechterung der Materialeigenschaft des Stützscheibenbelages zu realisieren. Als besonders vorteilhaft hat sich ein Wert des elektrischen Widerstandes von weniger als 3,5x10⁸ Ohm herausgestellt. Als ein besonders günstiger Kompromiß die Ausgestaltung des Belages, wobei dieser mit einem elektrischen Widerstand zwischen 2,0x10⁸ Ohm und 1,0x10⁶ Ohm ausgebildet ist. Dadurch wird erreicht, daß praktisch kein Schmutz von dem Stützscheibenbelag angezogen wird und andererseits keine verschlechterten Materialeigenschaften des Belages in Kauf genommen werden müssen. Es werden nicht mehr Additive dem Belag zugesetzt als erforderlich sind, eine Verschmutzung der Lagerung zu vermeiden.

In günstiger Weiterbildung der Erfindung ist der Belag der Stützscheibe aus Polyurethan, da dieser in seiner elektrischen Leitfähigkeit herabgesetzt werden kann, ohne daß dadurch die Materialeigenschaften allzusehr verschlechtert werden. Besonders günstig ist zum Herabsetzen des elektrischen Widerstandes des Belages dieser aus einem Werkstoff, der mit einem Additiv versehen ist, das seinerseits elektrisch leitend ist, wobei besonders günstig ein Additiv ist, das aus einem Metallpulver besteht. Besonders günstig ist die Verwendung von Kohlenstoff (z.B. Guß) als Additiv, weil dieser sehr kostengünstig ist.

Durch die erfindungsgemäße Ausgestaltung der Lagerung, wobei der Schaft des Offenend-Spinnrotors wenigstens in seinem Längenabschnitt, mit dem er mit der Lauffläche der Stützscheiben zusammenarbeitet, mit einer Reinigungsrille versehen ist, wird erreicht, daß die Wechselwirkung zwischen Rotorschaft und Stützscheibenbelag, bei der wechselseitig die Verschmutzung von Stützscheibe auf Rotorschaft und teilweise umgekehrt übertragen wird, unterbrochen wird. Die Reinigungsrille des Rotorschaftes sorgt nämlich dafür, daß der Schmutz von der Lauffläche der Stützscheibe sofort entfernt wird und dort nicht so lange verbleibt, bis er so verändert wird, daß er auf dem Rotorschaft haften bleibt. Der Schmutz kann vielmehr durch die Reinigungsrille aufgenommen und weggeschleudert werden. Es ist Schmutzpartikeln nicht möglich längere Zeit auf dem Stützscheibenbelag zu haften, was letztlich dazu führt, daß sie dann auf den Rotorschaft aufgewalzt werden. In vorteilhafter Ausgestaltung der Erfindung ist die Reinigungsrille in Form einer Gewinderille ausgebildet, die sich um den Schaft herum windet. Die Reinigungsrille kann dabei vorteilhaft ununterbrochen ausgestaltet sein, so daß der gesamte axiale Bereich des Rotorschaftes von dieser Reinigungsrille regelmäßig berührt wird. In einer anderen vorteilhaften Ausgestaltung der Erfindung kann die Reinigungsrille noch innerhalb des entsprechenden Längenabschnittes des Rotorschaftes unterbrochen sein und an anderer Stelle des Umfangs des Rotorschaftes fortgesetzt werden. Besonders günstig ist es allerdings, wenn die gesamte axiale Länge des Rotorschaftes, die mit der Lauffläche der Stützscheibe in Berührung kommt, mit der Reinigungsrille versehen ist. In besonders vorteilhafter Weiterbildung der Erfindung ist der Rotorschaft beschichtet. Diese Beschichtung wirkt sich günstig auf den Verschleiß des Rotorschaftes aus, der beispielsweise durch einen Antriebsriemen oder auch durch die Laufflächen der Stützscheiben verursacht werden kann. Günstigerweise wird die Reinigungsrille nach dem Beschichten in den Rotorschaft eingebracht, weil dadurch gewährleistet ist, daß die Abmessungen der Reinigungsrille nicht durch einen Beschichtungsvorgang verändert werden. Im umgekehrten Fall ist es vorteilhaft darauf zu achten, daß die in den Rotorschaft eingebrachte Reinigungsrille so ausgeführt ist, daß ein Beschichten ihre Abmaße zwar verändert, damit aber die gewünschten Maße zustande kommen.

In besonders günstiger Ausgestaltung der Erfindung besitzt die Reinigungsrille eine Tiefe von wenigstens 5 µm und höchstens 0,4 mm. Dadurch wird erreicht, daß eine sichere Reinigung erfolgt. In besonders günstiger Ausgestaltung besitzt die Reinigungsrille eine Tiefe zwischen 10 µm und 0,2 mm. Diese Tiefe gewährleistet, daß der Schmutz bei Berührung von Schaft und Stützscheibenbelag genügend Raum zur Verfügung hat und nicht erneut aufgewalzt wird. Eine wesentliche Schwächung des Rotorschaftes erfolgt dabei nicht. In einer weiteren vorteilhaften Ausgestaltung der Erfindung besitzt die Reinigungsrille eine Breite von wenigstens 0,1 mm und höchstens 1,0 mm, wobei sich als besonders günstig ein Bereich der Breite der Reinigungsrille zwischen 0,2 mm und 0,6 mm herausgestellt hat. Eine günstige Weiterbildung der Erfindung wird dadurch erreicht, daß die Reinigungsrille eine Neigung bezüglich der Mantellinie des Rotorschaftes besitzt. Anders ausgedrückt, daß die Reinigungsrille im Vergleich zur Achse des Rotorschaftes geneigt ist, wobei besonders günstige Werte zwischen 10° und 70° sind. Durch die Neigung der Rille kann ein Axialschub auf den Rotorschaft erzeugt werden, der vorteilhaft dadurch ausgeglichen werden kann, daß im Bereich eines ersten den Rotorschaft lagernden Stützscheibenpaares die Reinigungsrille in einer anderen Richtung geneigt ist, als im Bereich eines zweiten Stützscheibenpaares. Die beiden Axialschübe, die jeweils durch die beiden Lagerstellen des Rotorschaftes erzeugt werden, heben sich dadurch auf Um den Axialschub aufzuheben, ist es vorteilhaft auch möglich, im Bereich in dem der Rotorschaft von dem Stützscheibenbelag beaufschlagt wird zwei Reinigungsrillen anzubringen, die gegeneinander geneigt sind, oder mehrere, die senkrecht zur Rotorachse verlaufen und in Form einer endlosen Rille ausgebildet sind, die zueinander z.B. einen Abstand von 0,1 mm bis 0,5 mm haben.

Im folgenden wird die Erfindung anhand von zeichnerischen Darstellungen beschrieben. Es zeigen:
- **Figur 1**: eine Prinzipdarstellung einer Lagerung für einen Offenend-Spinnrotor gemäß der Erfindung;
- **Figur 2**: die Lauffläche einer Stützscheibe mit einer Reinigungsnut, dargestellt als Abwicklung in der Zeichenebene;
- **Figur 3**: die Lauffläche mit zwei parallel verlaufenden Reinigungsnut;
- **Figur 4**: eine Lauffläche einer Stützscheibe mit zwei Reinigungsnut, die sich kreuzen;
- **Figur 5**: eine Lauffläche mit einer Reinigungsnut, deren eine Kante über den Rand der Lauffläche hinausgeht;
- **Figur 6**: eine Lauffläche mit einer Reinigungsnut sowie einer Kühlnut;
- **Figur 7**: eine Lauffläche mit einer Reinigungsnut und zusätzlichen Einkerbungen;
- **Figur 8**: einen Schnitt durch eine Stützscheibe für eine erfindungsgemäße Lagerung mit einer Reinigungsnut im Schnitt;
- **Figur 9**: eine teilweise Schnittdarstellung einer Stützscheibe mit einer Reinigungsnut, bei der der Grundkörper umfangsseitig eine Vertiefung besitzt, die dem Verlauf der Reinigungsnut folgt;
- **Figur 10**: einen Offenend-Spinnrotor mit seinem Rotorschaft, mit Reinigungsrillen;
- **Figur 11**: einen Offenend-Spinnrotor mit Schaft, bei dem der Schaft Reinigungsrillen besitzt, die kehrgewindeartig ausgebildet sind.

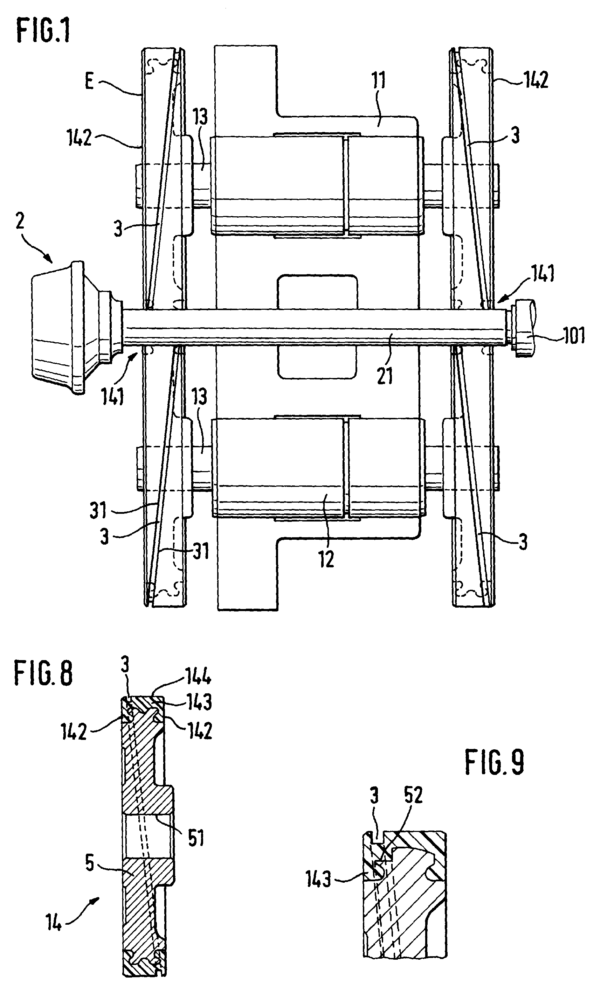

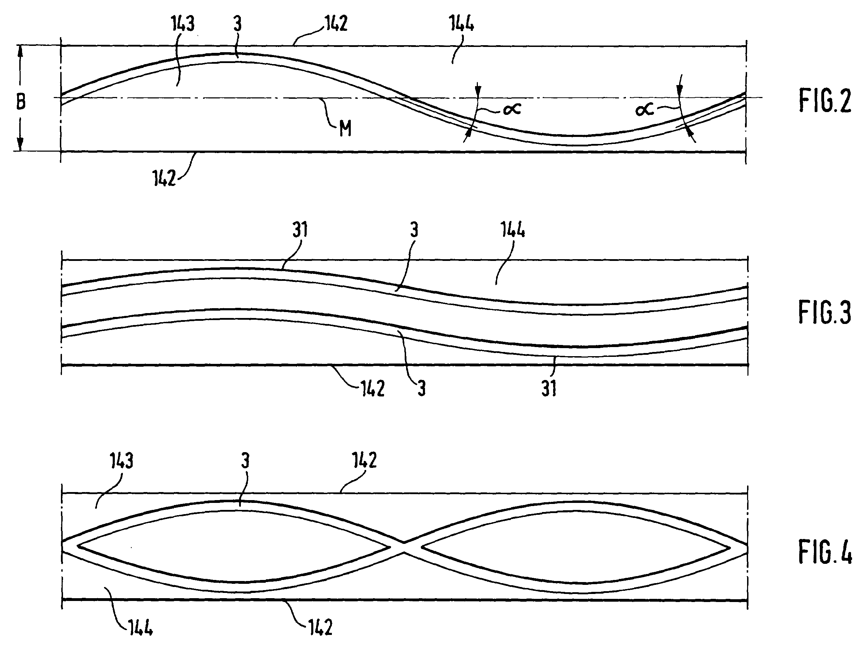

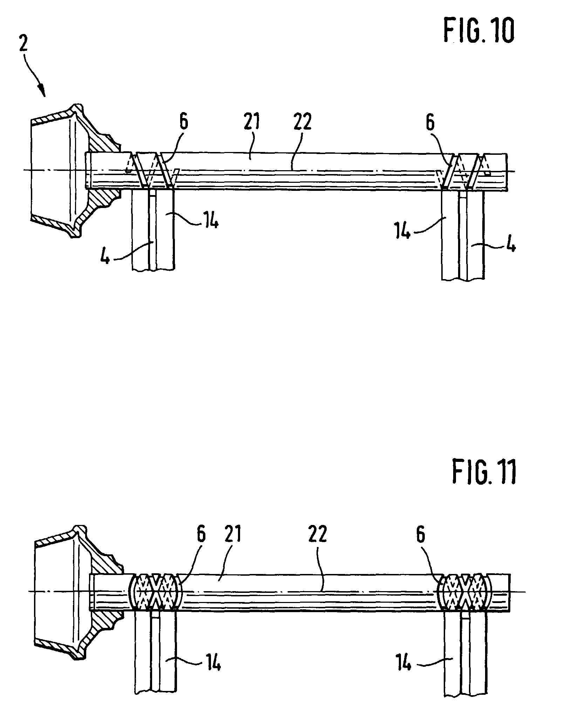

Figur 1 zeigt eine Prinzipdarstellung einer Lagerung für einen Offenend-Spinnrotor, wie sie vielfach an Offenend-Spinnmaschinen zum Einsatz kommt. Die Lagerung 1 besteht im wesentlichen aus einem Lagerbock 11 der die Stützscheibenlager 12 trägt. Die Stützscheibenlager 12 lagern je eine Welle 13, die ihrerseits an jedem ihrer Enden über einen Preßsitz mit einer Stützscheibe 14 verbunden ist. Die Stützscheiben bilden je zwei Stützscheibenpaare, so daß zwei Keilspalte 141 gebildet werden. Die Stützscheiben 14 tragen den Rotorschaft 21 des Offenend-Spinnrotors 2. Wird der Offenend-Spinnrotor 2 beispielsweise über einen Tangentialriemen (nicht gezeigt) angetrieben, rollt er in dem Keilspalt 141 an den Stützscheiben 14 ab. Dadurch werden diese in Drehung versetzt. Die Stützscheiben 14 sind mit einer Reinigungsnut 3 versehen, die bei Rotation der Stützscheiben 14 mit ihren Kanten 31 entlang der Berührlinie des Rotorschaftes wandert. Bei stillstehendem Rotorschaft (theoretisch betrachtet) und drehenden Stützscheiben würde also die Kante 31 der Reinigungsnut am Rotorschaft axial entlang schaben. Die Reinigungsnut 3 ist nämlich in den Belag 141 (vergleiche Figur 8) in Form einer endlosen Nut eingebracht, die von der einen Kante 142 der Stützscheibe 14 wieder zurück zur anderen Kante 142 verläuft (vergleiche Figur 2). Auf diese Weise wird der gesamte Bereich, in dem der Rotorschaft mit dem Belag 141 der Stützscheibe 14 in Berührung kommt einmal von einer Kante 31 der Reinigungsnut 3 berührt. Da die Ablaufverhältnisse des Rotorschaftes 21 auf den Stützscheiben 14 nicht schlupffrei erfolgt, ist gewährleistet, daß die Kante 31 sowohl jede Stelle des Rotorschaftes in axialer Richtung überstreicht, als auch, daß ein axiales Reiben am Rotorschaft stattfindet, da keine perfekten Abrollverhältnisse zwischen Rotorschaft 21 und Stützscheibe 14 vorkommen. Durch den Schlupf zwischen Stützscheibe 14 und Rotorschaft 21 schabt also die Kante 31 der Reinigungsnut 3 in axialer Richtung auf dem Rotorschaft entlang, wodurch dort Verunreinigungen abgetragen werden. Diese gelangen dann in die Reinigungsnut und werden von dieser abgeführt und letztlich aus dem Bereich des Keilspaltes 141 abgeführt. Die Lagerung 1 von Figur 1 besitzt an allen ihren vier Stützscheiben 14 eine Reinigungsnut 3. Es ist aber auch denkbar, daß nur pro Keilspalt 141 eine Stützscheibe 14 mit einer Reinigungsnut 3 ausgestattet ist. Vorteilhaft ist es dann jeweils diejenige Stützscheibe, die auf Grund der Laufverhältnisse die geringere Belastung erfährt. Dadurch wird die Schwächung des Belages 143, den dieser durch das Einbringen der Reinigungsnut 3 erfährt, etwas kompensiert. Vorteilhaft besitzt also diejenige Stützscheibe, die aus dem Keilspalt 141 herausdreht, die Reinigungsnut 3. Wie aus Figur 1 ersichtlich, sind die Reinigungsnuten 3 aller Stützscheiben 14 gegenüber der Ebene E, die parallel zur Kante 142 verläuft, teilweise geneigt (vergleiche Figur 2, Winkel α). Die Neigung der Reinigungsnut 3 kann einen Axialschub auf den mit sich drehenden Spinnrotor erzeugen, der mitunter nicht gewünscht ist. Daher sind die Neigungen der Reinigungsnuten 3 eines Stützscheibenpaares, das einen Keilspalt 141 bildet, so angeordnet, daß ihre Schubwirkung sich aufhebt. Entsprechendes gilt, wenn nur jeweils eine der Stützscheiben, pro Keilspalt 141 eine Reinigungsnut 3 besitzt. Der Vollständigkeit halber sei noch erwähnt, daß die Wellen 13 nicht parallel zueinander ausgebildet sind, sondern windschief, so daß auf den Rotorschaft durch die Stützscheiben ein Axialsehub ausgeübt wird. Dieser stützt sich in bekannter Weise an einem Axiallager 101 ab. Dieses kann beispielsweise als Spurlager ausgebildet sein oder, wie im Ausführungsbeispiel von Figur 1 angedeutet, in Form eines aerostatischen Axiallagers.

Figuren 2 bis 7 zeigen jeweils die Lauffläche einer Stützscheibe, wobei die Darstellung als Abwicklung in der Ebene dargestellt ist Figur 2 zeit die Abwicklung einer Lauffläche, wobei die Lauffläche 144 des Belages 143 eine Reinigungsnut 3 besitzt, die endlos ausgebildet ist und teilweise schraubenlinienförmig von der einen Kante 142 bis zur anderen Kante 142 der Stützscheibe verläuft. Die Reinigungsnut 3 hat gegenüber der Mittelachse M je nach Ausführung der Stützscheibe einen Winkel α zwischen ca. 2° und 10°. Im Bereich, in dem die Reinigungsnut an die Kante 142 der Lauffläche 144 gelangt, wird der Winkel α zu 0°, da sonst eine Umkehr der Reinigungsnut nicht möglich wäre. Die Umkehr bewirkt, daß eine endlose Reinigungsnut 3 möglich ist. Im Bereich der Kante 142 ist die Reinigungsnut 3 sehr dicht bis an diese herangeführt. Zwischen der Kante 31 der Reinigungsnut 3 an der Kante 142 der Stützscheibe befindet sich noch Belag 143, so daß die Stützscheibe 14 im Bereich der Kante einen umfangsseitig durchgängigen, ununterbrochenen Belag 143 besitzt. Dadurch werden Stöße auf den Rotorschaft, wenn dieser über den Belag 143 abrollt, vermieden. Die Reinigungsnut hat eine Breite von 1,0 mm und eine Nuttiefe von ebenfalls 1,0 mm. Dies gewährleistet im Ausführungsbeispiel von Figur 2 nicht nur eine gute Reinigung des Rotorschaftes von Verschmutzungen sondern auch eine Aufnahme der vom Rotorschaft entfernten Schmutzteilchen. Diese Schmutzteilchen können dann beim Betrieb der Stützscheibe durch die Fliehkraft diese wieder verlassen und werden aus dem Bereich der Rotorlagerung ausgeschieden. Die Tiefe von 1,0 mm bis 2,0 mm gewährleistet gleichzeitig auch eine Kühlung des Stützscheibenbelages. Die Breite B der Lauffläche 144 beträgt 10,0 mm, so daß bei einer Reinigungsnutbreite von 1,0 mm eine Schwächung des Belages um 10% erfolgt. In besonders gelagerten Fällen kann auch die Reinigungsnut ein weit geringere Breite haben, so daß die Unterbrechung der Lauffläche 144, betrachtet senkrecht zur Kante 142, weit weniger als 10% beträgt. Ein günstiger Wert ist dabei ein Wert von 7%. Da die Reinigungsnut 3 im Bereich der Mittellinie M effektiv eine größere Breite hat, ist dies bei der Ausgestaltung der Reinigungsnut 3 zu beachten, wenn eine minimale Unterbrechung der Lauffläche 144 gewünscht wird. Die Breite der Reinigungsnut ist dann evtl. geringer auszugestalten.

Figur 3 zeigt eine Lauffläche 144 einer Stützscheibe für ein erfindungsgemäßes Lager, die mit zwei Reinigungsnuten 3 ausgestaltet ist. Im Verlauf ähneln die Reinigungsnuten 3 von Figur 3 der Reinigungsnut 3 von Figur 2, nur daß über die Breite der Lauffläche 144 von Figur 3 zwei parallele Reinigungsnuten 3 verteilt sind. Dies hat zur Folge, daß der Winkel α ca. nur halb so groß ist wie der bei Figur 2. Die Neigung der beiden Reinigungsnuten 3 ist dabei gleich. Die Reinigungsnuten 3 sind zwar mit einem kleineren Winkel gegenüber einer Umfangslinie um die Stützscheibe geneigt, jedoch besitzt diese Ausführungsform der Erfindung eine günstigere Verteilung zwischen den Bereichen, die von einer Nut unterbrochen sind und in denen keine Nut verläuft. Dies ist beim Vergleich zwischen Figur 2 und Figur 3 deutlich. Die Reinigungsnuten 3 von Figur 3 sind weniger breit ausgebildet als die Reinigungsnut 3 bei Figur 2. Die Breite beträgt hier nur 0,4 mm, so daß die Unterbrechung der Lauffläche 144, quer zur Kante 142 betrachtet, sogar geringer ist als dies bei Figur 2 der Fall ist. Die Nutkanten 31, die im Bereich einer Kante 142 der Stützscheibe vorbeilaufen, verlaufen ebenso wie bei Figur 2 derart, daß ein Belag 143 zwischen Nutkante 31 und Kante 142 der Stützscheibe verbleibt. Dies gewährleistet, wie bei Figur 1, einen ruhigen Lauf des Spinnrotors auf der Stützscheibe. Die Tiefe der Reinigungsnuten 3 beträgt bei diesem Ausführungsbeispiel nur 0,3 mm.

Figur 4 zeigt eine andere Ausführungsform eines Belages 143 einer Stützscheibe, bei der die Lauffläche 144, zwar ebenso wie bei Figur 3, von zwei Reinigungsnuten unterbrochen ist, diese jedoch anders als bei Figur 3 jeweils so ausgebildet sind, daß beide Reinigungsnuten jeweils von Kante 142 zu Kante 142 verlaufen. Jede der beiden Reinigungsnuten hat also die selben geometrischen Verhältnisse wie die Reinigungsnut 3 von Figur 2. Die beiden Reinigungsnuten 3 von Figur 4 sind lediglich um 180°, bezogen auf den Umfang der Stützscheibe, zueinander versetzt. Dies hat zur Folge, daß sich die beiden Reinigungsnuten 3 von Figur 4 auf der Lauffläche 144 zweimal kreuzen. Eine der Kreuzungsstellen ist in der Mitte von Figur 4 erkennbar, die andere Kreuzung ist zum Teil am linken Rand von Figur 4 und zum Teil am rechten Rand von Figur 4 zu sehen. Um an den Kreuzungsstellen keine zu große Schwächung der Lauffläche zu bewirken, sind die beiden Reinigungsnuten 3 von Figur 4 jeweils nur 0,2 mm breit. Der Deutlichkeit halber sind die Nuten in allen zeichnerischen Darstellungen breiter ausgeführt.

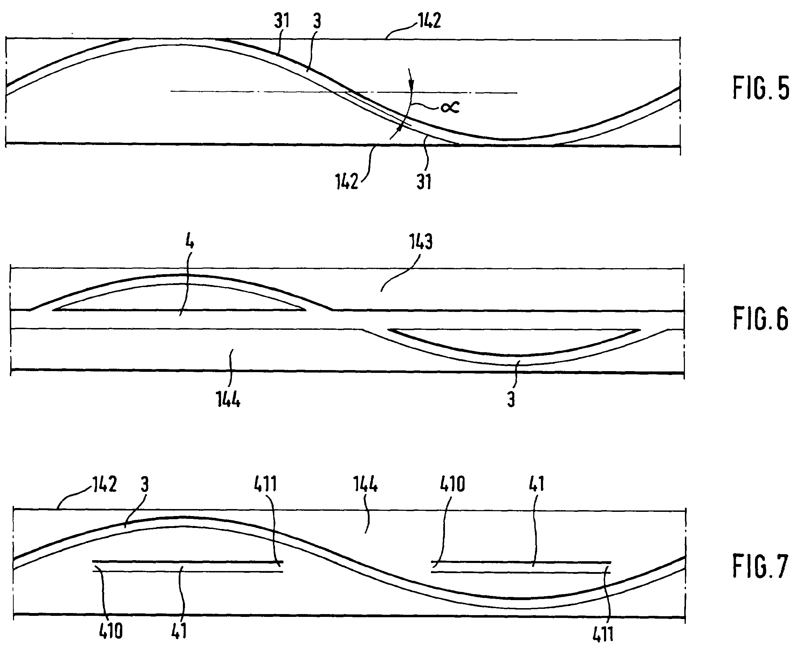

Figur 5 zeigt eine ähnliche Ausführungsform einer Reinigungsnut 3, wie die in Figur 2 gezeigte, lediglich beide Nutkanten 31 gehen abwechselnd über die Kante 142 der Lauffläche 144 hinaus. Durch diese Ausgestaltung kann erreicht werden, daß der Winkel α, bei ansonsten gleichen Verhältnissen, größer ausgebildet werden kann als bei Figur 2. Dadurch, daß immer nur jeweils eine Nutkante 31 über die Kante 142 der Stützscheibe hinausgeht, ist ein sanftes Überrollen dieser Stelle durch den Rotorschaft möglich. Die Reinigungswirkung der Nutkante 31 erstreckt sich, in axialer Richtung des Rotorschaftes betrachtet, über eine größere Länge als beispielsweise bei Figur 2. Dies kann dann nötig sein, wenn eine besonders starke und fest haftende Schmutzschicht während des Betriebes zu befürchten ist. Die Tiefe der Reinigungsnut 3 von Figur 5 beträgt 0,2 mm, da dies die kritische Stelle, bei der die Nutkante 31 über den Rand 142 verläuft, nur wenig schwächt.

Beim Ausführungsbeispiel von Figur 6 besitzt die Lauffläche 144 zwei Nuten, von denen die eine Reinigungsnut 3 ist, während die andere eine Kühlnut 4 ist. Diese ist beim Ausführungsbeispiel von Figur 6 in klassischer Weise, wie im Stand der Technik üblich, mittig in der Lauffläche 144 angeordnet. Die Kühlnut hat eine Breite von 1,0 mm und eine ebenso große Tiefe. Die Reinigungsnut 3 ihrerseits ist vom Verlauf her so ausgebildet, wie die von Figur 2. Sie kreuzt die Kühlnut 4 an zwei Stellen. Die Reinigungsnut 3 kann beim Ausführungsbeispiel von Figur 6 besonders schmal ausgebildet werden, d.h. mit einer Breite von 0,2 mm und ebenso mit einer sehr geringen Tiefe, nämlich 0,2 mm, da von der Reinigungsnut 3 keinerlei wärmeabführende Funktion verlangt wird. Eine geringe Tiefe und Breite der Reinigungsnut 3 bewirkt außerdem eine sichere Funktion, da das Überrollen der Kreuzungsstelle der beiden Nuten durch den Rotorschaft durch eine geringe Tiefer der Reinigungsnut 3 erleichtert wird. An der Kreuzungsstelle erfährt die Lauffläche 144 die größte Unterbrechung des Belages 143 durch die Nuten. Im Ausführungsbeispiel von Figur 6 ist die Unterbrechung günstigerweise trotzdem noch weit unter 40%.

Figur 7 zeigt eine Kombination von Kühlnut und Reinigungsnut 3, bei der keine möglicherweise kritische Kreuzungsstelle zwischen Kühlnut und Reinigungsnut vorkommt. Die Kühlnut ist beim Ausführungsbeispiel von Figur 7 in Form von Einkerbungen 41 ausgebildet, die an ihrem Anfang 410 und an ihrem Ende 411 stufenlos in die Lauffläche 144 übergehen. Der Übergangsbereich kann jeweils zwischen ca. 2,0 mm und 20 mm betragen. Im übrigen besitzen die Einkerbungen 41 die für Kühlnuten 4 gängigen Abmessungen von Tiefe und Breite. Die Reinigungsnut 3 kann im Vergleich zum Ausführungsbeispiel von Figur 6 breiter ausgestaltet werden, da der kritische Kreuzungsbereich von Reinigungsnut und Kühlnut beim Ausführungsbeispiel von Figur 7 vermieden wird. Bei Ausgestaltung der Breite der Einkerbungen 41 und der Reinigungsnut 3 von jeweils 1,0 mm kann trotzdem erreicht werden, daß die Unterbrechung der Lauffläche 144, senkrecht zur Kante 142 weniger als 25% beträgt.

Figur 8 zeigt einen Schnitt durch eine Stützscheibe mit einer Reinigungsnut 3 im Belag 143, der an seinem Außenumfang die Lauffläche 144 bildet. Die Stützscheibe besteht aus einem Grundkörper 5, der beispielsweise als Alluminium-Spritzgußteil ausgebildet ist. Die Stützscheibe 14 besitzt in ihrer Mitte eine Bohrung 51 über die sie an der Welle 13 eines Stützscheibenlagers 12 mittels einer Preßpassung befestigt ist (vergleiche Figur 1). Je nach Schnittführung durch die Stützscheibe, wandert die Reinigungsnut 3 vom Bereich der linken Kante 142 zur rechten Kante 142 der Stützscheibe. Im Bereich des Übergangs zwischen Grundkörper 5 und Belag 143 ist der Außenumfang des Grundkörpers 5 in besonderer Art ausgestaltet, damit eine bessere Haftung zwischen Grundkörper 5 und Belag 143 gewährleistet werden kann. Die bekannten Grundkörper sind so gestaltet, daß im Bereich einer mittigen Kühlnut, die hier in Figur 8 nicht dargestellt ist, eine genügende Dicke des Belages 143 vorhanden ist. Die bei einer erfindungsgemäßen Lagerung einzusetzende Reinigungsnut 3, die über den gesamten Außenumfang bzw. über die gesamte Breite des Belages 143 verläuft, muß also im besonderen dafür gesorgt werden, daß eine genügende Belagdicke vorhanden ist. Um dies zu gewährleisten, ist bei dem Grundkörper von Figur 9 vorgesehen, daß dieser an seiner Umfangsseite eine Vertiefung 52 besitzt, so daß zwischen Reinigungsnut 3 und Grundkörper 5 in Folge der Vertiefung 52 eine genügende Materialstärke des Belages 143 verbleibt. Diese Vertiefung 52 besitzt also einen sehr ähnlichen Verlauf wie die darüber liegende Reinigungsnut 3. Für die Herstellung einer solchen Stützscheibe ist also vorgesehen, daß beim leichteren Herstellen der Reinigungsnut 3 eine Markierung an der Stützscheibe vorgesehen ist, so daß z.B. beim Eindrehen der Reinigungsnut 3 in den Belag 143 die Reinigungsnut 3 genau oberhalb der Vertiefung 42 gedreht werden kann. Das gleiche gilt erforderlichenfalls für eine zusätzliche Kühlnut.

Figur 10 zeigt einen Offenend-Spinnrotor 2 für eine erfindungsgemäß ausgestaltete Lagerung. Figur 10 zeigt das Aufliegen des Rotorschaftes 21 auf zwei Stützscheiben 14. Diese sind mit einer mittigen Kühlnut 4 ausgestattet. Um zu verhindern, daß Staub oder Schmutzteilchen sich auf dem Rotorschaft 21 festsetzen, besitzt dieser in dem Bereich mit dem er mit den Stützscheiben 14 in Berührung kommt, eine Reinigungsrille 6, die sich gewinderillenartig um den Schaft rum windet. Die Reinigungsrillen 6 sind mit einer Neigung zur Achse 22 des Schaftes 21 ausgebildet und haben eine solche Steigung, ähnlich einer Gewindesteigung, daß sie wenigstens eine Umdrehung im Bereich der von der Stützscheibe berührt wird, vollführen. Außerhalb des Berührungsbereiches durch die Stützscheibe laufen die Reinigungsrillen aus. Außerhalb sind sie zum Reinigen bzw. Sauberhalten des Rotorschaftes nicht erforderlich. Die Reinigungsrille 6 ist bezüglich zur Achse 22 des Rotorschaftes 21 um ca. 15° geneigt. Die Reinigungsrille 6 ist im Bereich der einen Stützscheibe im Vergleich zur anderen Stützscheibe in umgekehrter Richtung geneigt. Dadurch wird erreicht, daß kein Axialschub auf den Rotorschaft ausgeübt wird. Die Reinigungsrille kann je nach Ausführung zwischen 10° und 70° zu einer Senkrechten zur Schaftachse geneigt sein.

Figur 11 zeigt einen Rotorschaft 21, bei dem die Reinigungsrillen als eine Art Kehrgewinde-Rille ausgebildet ist. Es gibt also im Bereich jeder einzelnen Stützscheibe in die eine Richtung bezüglich zur Schaftachse 22 geneigte Reinigungsrille als auch eine umgekehrt geneigte. D.h. jede einzelne Lagerstelle ist axialschubfrei. Die Enden der Reinigungsrillen 6 gehen ineinander über, so daß eine endlose Rille erhalten wird. Die Reinigungsrille von Figur 10 besitzt eine Breite von 0,3 mm. Ihre Tiefe beträgt 0,05 mm (50 µm).

Gemäß einer der vorliegenden Erfindungen besteht der Belag 143 der Stützscheibe aus einem Material mit einem elektrischen Widerstand, der kleiner als 1,0x10⁹ Ohm ist. Unabhängig von einer Reinigungsnut kann dadurch verhindert werden, daß sich auf dem Rotorschaft Schmutzteilchen festsetzen. Der Belag 143 einer Stützscheibe ist dazu beispielsweise aus Polyurethan ausgebildet, das mittels Additiven einen herabgesetzten elektrischen Widerstand besitzt. Durch Zugabe von mehr oder weniger Additiven oder besonderen Additiven, beispielsweise durch Metallpulver, kann der elektrische Widerstand auf einen besonders günstigen Wert zwischen 2,0x10⁸ Ohm und 1,0x10⁶ Ohm herabgesetzt werden. Die Ausgestaltung des Stützscheibenbelages 143 gemäß dieser Erfindung, macht es möglich, auf zusätzliche Maßnahmen wie beispielsweise eine Reinigungsnut im Belag oder eine Reiniungsrille im Rotorschaft zu verzichten. Der erfindungsgemäß ausgestaltete Belag mit einem elektrischen Widerstand von weniger als 1,0x10⁹ Ohm kann selbstverständlich auch in Kombination mit einer Reinigungsnut oder Reinigungsrille eingesetzt werden. Es ist auch möglich einen derartigen Belag für eine Stützscheibe auch mit den beiden anderen Erfindungen zu kombinieren.

## Patentansprüche

1. Lagerung für einen Offenend-Spinnrotor, bei der der Schaft des Spinnrotors über Stützscheiben gelagert ist, wobei eine Stützscheibe aus einem Grundkörper besteht, auf dem ein ringförmiger Belag aufgebracht ist, der die Lauffläche für den Spinnrotor bildet, dadurch gekennzeichnet, daß die Lauffläche (144) des Belages (143) wenigstens einer Stützscheibe (14) eine Reinigungsnut (3) zum Reinigen des Rotorschaftes (21) von Ablagerungen besitzt.

2. Lagerung nach Anspruch 1, dadurch gekennzeichnet, daß die Reinigungsnut (3) teilweise in einem Winkel (α) zur Mittelachse M der Lauffläche (144) geneigt ausgebildet ist.

3. Lagerung nach Anspruch 1 oder 2, dadurch gekennzeichnet, daß die Reinigungsnut (3) eine in sich geschlossene Nut ist.

4. Lagerung nach einem oder mehreren der Ansprüche 1 bis 3, dadurch gekennzeichnet, daß die Reinigungsnut (3) eine Breite zwischen 0,2 mm und 2,0 mm besitzt.

5. Lagerung nach einem oder mehreren der Ansprüche 1 bis 4, dadurch gekennzeichnet, daß die Reinigungsnut (3) eine Tiefe zwischen 0,2 mm und 2,0 mm besitzt.

6. Lagerung nach einem oder mehreren der Ansprüche 1 bis 5, dadurch gekennzeichnet, daß die Lauffläche (144) des Belages (143) mehrere Reinigungsnuten (3) besitzt.

7. Lagerung nach Anspruch 6, dadurch gekennzeichnet, daß die Reinigungsnuten (3) parallel zueinander verlaufen.

8. Lagerung nach Anspruch 6, dadurch gekennzeichnet, daß sich die Reinigungsnuten (3) kreuzen.

9. Lagerung nach einem oder mehreren der Ansprüche 6 bis 8, dadurch gekennzeichnet, daß die Lauffläche (144) des Belages zwei Reinigungsnuten besitzt.

10. Lagerung nach einem oder mehreren der Ansprüche 1 bis 9, dadurch gekennzeichnet, daß die Lauffläche (144) zusätzlich eine oder mehrere Kühlnuten (4) besitzt.

11. Lagerung nach Anspruch 10, dadurch gekennzeichnet, daß die Kühlnut (4) senkrecht zur Achse der Stützscheibe (14) um den Umfang der Stützscheibe (14) verläuft.

12. Lagerung nach einem oder mehreren der Ansprüche 1 bis 11, dadurch gekennzeichnet, daß die Lauffläche (144) des Belages (143) zusätzliche Einkerbungen (41) besitzt.

13. Lagerung nach einem oder mehreren der Ansprüche 1 bis 12, dadurch gekennzeichnet, daß zwischen Kante (142), der Lauffläche (144) und der dieser zugewandten Nutkante (31) der Reinigungsnut (3) die Lauffläche (144) in Umfangsrichtung einen ununterbrochenen Verlauf besitzt.

14. Lagerung nach einem oder mehreren der Ansprüche 1 bis 12, dadurch gekennzeichnet, daß wenigstens eine der Nutkanten (31) der Reinigungsnut (3) über die Kante (142) der Lauffläche (144) der Stützscheibe (14) hinausläuft.

15. Lagerung nach einem oder mehreren der Ansprüche 1 bis 14, dadurch gekennzeichnet, daß die Lauffläche (144) des Belages (143) der Stützscheibe (14), in axialer Richtung betrachtet, höchstens zu 40% von einer Kühlnut (4) und/oder Reinigungsnut (3) unterbrochen ist.

16. Lagerung nach Anspruch 15, dadurch gekennzeichnet, daß die Lauffläche (144) des Belages (143) der Stützscheibe (14), in axialer Richtung der Stützscheibe (14) betrachtet, zwischen 7% und höchstens 25% unterbrochen ist.

17. Lagerung nach Anspruch 15 oder 16, dadurch gekennzeichnet, daß, in axialer Richtung betrachtet, die Lauffläche von höchstens drei Nuten (3, 4, 41) unterbrochen ist.

18. Lagerung nach einem oder mehreren der Ansprüche 10 bis 17, dadurch gekennzeichnet, daß die Breite der Reinigungsnut (3) kleiner als die Breite der Kühlnut (4, 41) ist.

19. Lagerung nach einem oder mehreren der Ansprüche 1 bis 18, dadurch gekennzeichnet, daß der Grundkörper (5) an seiner Umfangsfläche (53) eine Vertiefung (52) besitzt, die dem Verlauf der Reinigungsnut (3) angepaßt ist, um die radiale Dicke des Belages (143) zwischen Grundkörper (5) und Reinigungsnut (3) in etwa konstant zu halten.

20. Lagerung nach einem oder mehreren der Ansprüche 1 bis 19, dadurch gekennzeichnet, daß die Reinigungsnut (3) ein u-förmiges Profil aufweist.

21. Lagerung nach einem oder mehreren der Ansprüche 1 bis 20, dadurch gekennzeichnet, daß die Reinigungsnut (3) ein v-förmiges Profil aufweist.

22. Lagerung für einen Offenend-Spinnrotor, bei der der Schaft des Spinnrotors über Stützscheiben gelagert ist, wobei eine Stützscheibe aus einem Grundkörper besteht, auf dem ein ringförmiger Belag aufgebracht ist, der die Lauffläche für den Spinnrotor bildet, insbesondere nach einem oder mehreren der Ansprüche 1 bis 18, dadurch gekennzeichnet, daß der Belag (143) aus einem Kunststoff besteht und der Belag (143) wenigstens im Bereich der Lauffläche (144) einen elektrischen Widerstand besitzt, der kleiner als 1,0x10⁹ Ohm beträgt.

23. Lagerung nach Anspruch 22, dadurch gekennzeichnet, daß der elektrische Widerstand weniger als 3,5x10⁸ Ohm beträgt.

24. Lagerung nach Anspruch 23, dadurch gekennzeichnet, daß der elektrische Widerstand zwischen 2,0x10⁸ Ohm und 1,0x10⁶ Ohm beträgt.

25. Lagerung nach einem oder mehreren der Ansprüche 22 bis 24, dadurch gekennzeichnet, daß der Belag aus Polyurethan besteht.

26. Lagerung nach einem oder mehreren der Ansprüche 22 bis 25, dadurch gekennzeichnet, daß der Belag ein oder mehrere Additive enthält, zur Herabsetzung des elektrischen Widerstandes des Belages (143).

27. Lagerung nach Anspruch 26, dadurch gekennzeichnet, daß als Additiv ein Metallpulver im Belag (143) enthalten ist.

28. Lagerung für einen Offenend-Spinnrotor, bei der der Schaft des Spinnrotors über Stützscheiben gelagert ist, wobei eine Stützscheibe aus einem Grundkörper besteht, auf dem ein ringförmiger Belag aufgebracht ist, der die Lauffläche für den Spinnrotor bildet, insbesondere nach einem oder mehreren der Ansprüche 1 bis 27, dadurch gekennzeichnet, daß der Schaft (21) wenigstens in seinem Längenabschnitt mit dem er mit der Lauffläche (144) der Stützscheibe (14) zusammenarbeitet, mit einer Reinigungsrille (6) versehen ist.

29. Lagerung nach Anspruch 28, dadurch gekennzeichnet, daß die Reiniungsrille (6) in Form einer Gewinderille um den Schaft (21) herum verläuft.

30. Lagerung nach einem der Ansprüche 28 oder 29, dadurch gekennzeichnet, daß der Schaft (21) beschichtet ist.

31. Lagerung nach einem oder mehreren der Ansprüche 28 bis 30, dadurch gekennzeichnet, daß die Reinigungsrille (6) eine Tiefe von wenigstens 5 µm und höchstens 0,4 mm hat.

32. Lagerung nach Anspruch 31, dadurch gekennzeichnet, daß die Reinigungsrille (6) eine Tiefe zwischen 10 µm und 0,2 mm besitzt.

33. Lagerung nach einem oder mehreren der Ansprüche 28 bis 32, dadurch gekennzeichnet, daß die Reinigungsrille (6) eine Breite von wenigstens 0,1 mm und höchsten 1,0 mm hat.

34. Lagerung nach Anspruch 33, dadurch gekennzeichnet, daß die Reinigungsrille (6) eine Breite zwischen 0,2 mm und 0,6 mm besitzt.

35. Lagerung nach einem oder mehreren der Ansprüche 28 bis 34, dadurch gekennzeichnet, daß die Reinigungsrille (6) im Vergleich zur Achse des Rotorschaftes mit einem Winkel zwischen 10° und 45° geneigt ist.

36. Lagerung nach einem oder mehreren der Ansprüche 28 bis 35, dadurch gekennzeichnet, daß die Reinigungsrille (6) im Vergleich zur Achse (22) des Rotorschaftes (21) im Bereich eines ersten den Rotorschaft lagernde Stützscheibenpaares in der anderen Richtung geneigt ist, als im Bereich eines zweiten Stützscheibenpaares.

37. Lagerung nach einem oder mehreren der Ansprüche 28 bis 36, dadurch gekennzeichnet, daß der Schaft (21) in seinem Längenabschnitt, mit dem er mit der Lauffläche (144) einer Stützscheibe (14) zusammenarbeitet wenigstens eine weitere Reinigungsrille (6) besitzt.

38. Lagerung nach Anspruch 37, dadurch gekennzeichnet, daß die Reinigungsrillen (6) senkrecht zur Achse (22) der Rotorschaftes (21) verlaufen.

39. Lagerung nach einem oder mehreren der Ansprüche 28 bis 38, dadurch gekennzeichnet, daß der Schaft (21) in seinem Längenabschnitt, mit dem er mit der Lauffläche (144) einer Stützscheibe (14) zusammenarbeitet eine weitere Reinigungsrille (6) besitzt, die gegensinnig zur ersten Reinigungsrille (6) zur Achse (22) des Rotorschaftes (21) geneigt ist.
